# EUROPÄISCHE PATENTSCHRIFT

(11) **EP 2 790 040 B1**
(45) Veröffentlichungstag und Bekanntmachung des Hinweises auf die Patenterteilung: **14.07.2021**
(21) Anmeldenummer: 13162699.6
(22) Anmeldetag: 08.04.2013
(51) Int. Cl.: G01V 8/12, F16P 3/14

(54) **System und Verfahren zur Konfiguration eines Überwachungsbereiches einer optoelektronischen Überwachungseinrichtung**
System and method for configuring a surveillance area of an optoelectronic monitoring device
Système et procédé de configuration d'une zone de surveillance d'un dispositif de surveillance optoélectronique

(43) Veröffentlichungstag der Anmeldung: 15.10.2014
(73) Patentinhaber: SICK AG, 79183 Waldkirch (DE)
(72) Erfinder: Haberer, Manfred, 79359 Riegel (DE)
(74) Vertreter: Manitz Finsterwald Patent- und Rechtsanwaltspartnerschaft mbB

(56) Entgegenhaltungen:
- EP-A1- 2 048 557
- EP-A1- 2 053 538
- DE-B4- 19 964 492
- DE-U1-202011 051 975

## Beschreibung

Die Erfindung betrifft ein System zur Konfiguration eines Überwachungsbereiches eines Laserscanners und ein entsprechendes Verfahren.

Optoelektronische Überwachungseinrichtungen werden zum Beispiel eingesetzt, um Überwachungsbereiche zu überwachen. Zum Beispiel ist es bei Sicherheitsanwendungen oftmals notwendig, sicherzustellen, dass in einem solchen Überwachungsbereich keine unzulässigen Objekte vorhanden sind. So ist es z.B. notwendig, bei einer gefahrenträchtigen Maschine, z.B. einer Presse, zu gewährleisten, dass sich während des Betriebs in einem definierten Schutzbereich kein Körperteil einer Bedienperson befindet und damit gefährdet wäre.

Andere Anwendungen sehen zum Beispiel vor, dass der Bereich vor einem sich bewegenden Fahrzeug, z.B. eines fahrerlosen Transportsystems, überwacht wird, damit keine Kollisionen vorkommen können.

EP 2 053 538 A1 beschreibt die Konfiguration eines Überwachungsbereiches einer dreidimensionalen Kamera.

Als optoelektronische Überwachungseinrichtungen kommen insbesondere Laserscanner zum Einsatz. Bei derartigen Geräten wird ein Laserstrahl in den Überwachungsbereich ausgesendet und, z.B. durch einen rotierenden Spiegel, periodisch abgelenkt, so dass der Laserstrahl den Überwachungsbereich abscannt. Befindet sich ein Objekt im Scanbereich des Lasers, so wird das vom Laser ausgesendete Licht reflektiert bzw. remittiert und gelangt zu dem Laserscanner zurück und wird dort von einem Empfänger detektiert. Mit einer entsprechenden Auswerteeinheit ist also die Präsenz eines Objekts in dem Überwachungsbereich feststellbar. Ist die Laserstrahlung gepulst oder moduliert, so kann zusätzlich die Lichtlaufzeit eines ausgesendeten und gegebenenfalls reflektierten Lichtpulses ausgewertet werden, um über die Lichtgeschwindigkeit eine Information über den Abstand des reflektierenden bzw. remittierenden Objekts zu erhalten.

Damit ein Laserscanner einen Betrieb sicher ausführen kann und der richtige Bereich als Überwachungsbereich überwacht wird, muss der Laserscanner vor seinem Betrieb konfiguriert werden. Insbesondere muss der zu überwachende Überwachungsbereich festgestellt bzw. festgelegt werden.

Bekannte Lösungen sehen hierzu vor, dass während der Inbetriebnahme des Laserscanners mit Hilfe eines Personal Computers und einer speziellen Software die Schutzfeldgeometrie an einer graphischen Benutzeroberfläche parametrisiert und über eine Kommunikationsschnittstelle in die optoelektronische Überwachungsvorrichtung übertragen wird. Dieser Vorgang ist aus Sicherheitsgründen nur durch geschulte Anwender mit entsprechenden Kenntnissen unter anderem der Benutzeroberfläche durchführbar.

Andere bekannte Lösungen sehen vor, dass der Überwachungsbereich direkt an dem Laserscanner mit Hilfe von Tasten und einem Display einzugeben ist. Ein solches Verfahren ist aufgrund der aufwendigen Konfigurierung nur für sehr einfache Überwachungsbereichsgeometrien möglich, da auf eine entsprechende Benutzeroberfläche verzichtet wird.

Aufgabe der vorliegenden Erfindung ist es, ein System und ein Verfahren zur Konfiguration eines Überwachungsbereiches eines Laserscanners zur Verfügung zu stellen, mit denen es möglich ist, sehr schnell und intuitiv den Überwachungsbereich zu konfigurieren.

Diese Aufgabe wird mit einem System mit den Merkmalen des Anspruchs 1 bzw. einem Verfahren mit den Merkmalen des Anspruchs 10 gelöst. Unteransprüche sind auf vorteilhafte Ausgestaltungen gerichtet.

Das erfindungsgemäße System weist eine Sequenzerzeugungseinheit zur Erzeugung zeitlich veränderlicher unterscheidbarer optischer Sequenzen auf. Mit einer Auswahleinrichtung kann eine optische Sequenz ausgewählt werden und mit Hilfe einer Auslöseeinrichtung die Erzeugung der ausgewählten optischen Sequenz ausgelöst werden. Ein Laserscanner des erfindungsgemäßen Systems, der zur ortsaufgelösten Überwachung eines zu konfigurierenden Überwachungsbereiches vorgesehen ist, weist insbesondere eine optische Empfangseinrichtung auf, mit deren Hilfe die von der Sequenzerzeugungseinheit erzeugte optische Sequenz detektiert werden kann. Bei dieser optischen Empfangseinrichtung kann es sich vorteilhafterweise um die bei dem Laserscanner zur ortsaufgelösten Überwachung des Überwachungsbereiches ohnehin vorhandene optische Empfangseinrichtung handeln.

Der Laserscanner des erfindungsgemäßen Systems weist weiterhin eine erste Speichereinrichtung auf, in der eine Zuordnung zwischen den an der Sequenzerzeugungseinheit auswählbaren optischen Sequenzen einerseits und Formelementen aufweist, die zur Charakterisierung der Form eines zu konfigurierenden Überwachungsbereiches dienen können, abgelegt ist. Diese Zuordnung ermöglicht eine eindeutige Zuordnung eines Formelements zu einer entsprechenden optischen Sequenz. Beispielsweise kann einer speziellen optischen Sequenz das Formelement "Ecke des Überwachungsbereiches" zugeordnet sein, etc. Der Laserscanner des erfindungsgemäßen Systems weist außerdem eine zweite Speichereinrichtung auf, in der die Form eines Überwachungsbereiches abgespeichert werden kann, nachdem sie mit dem erfindungsgemäßen System konfiguriert wurde. Grundsätzlich können die erste und die zweite Speichereinrichtung auch durch dieselbe Speichereinrichtung gebildet sein.

Schließlich weist der Laserscanner des erfindungsgemäßen Systems eine Auswerteeinrichtung auf, die aus (i) den detektierten optischen Sequenzen, die mit der Sequenzerzeugungseinheit erzeugt werden, und (ii) den in der ersten Speichereinrichtung abgelegten, diesen optischen Sequenzen zugeordneten Formelementen die Form eines Überwachungsbereiches bestimmt und in der zweiten Speichereinrichtung ablegt.

Die Auslöseeinrichtung und die Auswahleinrichtung können z.B. durch eine Anzahl von Knöpfen bzw. Schaltern an der Sequenzerzeugungseinheit gebildet sein, die unterschiedlichen optischen Sequenzen zugeordnet sind. Selbstverständlich kann auch vorgesehen sein, dass durch Betätigen der Auswahleinrichtung auch gleich die Erzeugung der ausgewählten optischen Sequenz ausgelöst wird, so dass die Auswahl- und Auslöseeinrichétung für die jeweilige optische Sequenz durch ein Element gebildet werden.

Alternativ kann vorgesehen sein, dass die Auswahl über eine z.B. funkbasierte Fernsteuerung geschieht.

Die in der ersten Speichereinrichtung abgelegten Formelemente können z.B. die Anfangs- und Endpunkte einer vorbestimmten Linie sein, z.B. einer Teilkreislinie, mit der ein Überwachungsbereich eindeutig identifiziert werden kann. So kann z.B. durch Festlegung des Anfangs- und Endpunktes einer Teilkreislinie der von einem Laser abzuscannende halbkreisförmige Umgebungsbereich eines Laserscanners als Überwachungsbereich festgelegt werden.

Ebenso ist es möglich, dass ein solches Formelement durch den Radius eines Kreises oder Teilkreises festgelegt wird, weil auch auf diese Weise eine eindeutige Bestimmung eines Überwachungsbereiches möglich ist.

Eine andere bevorzugte Ausgestaltung sieht vor, dass die Formelemente durch die Eckpunkte eines Polygonzuges gebildet werden, so dass es möglich ist, polygonförmige, also z.B. rechteckige, Überwachungsbereiche festzulegen, indem die Eckpunkte des Polygons als Formelemente verwendet werden.

Ein erfindungsgemäßes Konfigurationsverfahren, das mit einem erfindungsgemäßen System durchgeführt werden kann, dient zur Bestimmung eines Überwachungsbereiches. Eine Sequenzerzeugungseinheit eines erfindungsgemäßen Systems wird dazu an einem ausgewählten Ort eines festzulegenden Überwachungsbereiches platziert, also z.B. an der Ecke eines Polygonzuges oder auf dem Radius eines Kreises. Mit der Auswahleinrichtung der Sequenzerzeugungseinheit wird dann diejenige optische Sequenz ausgewählt, die dem Formelement entspricht, das die Form des festzulegenden Überwachungsbereiches an dem ausgewählten Ort charakterisiert. Befindet sich also die Sequenzerzeugungseinheit z.B. gerade an der Ecke eines Polygonzuges, so wird an der Auswahleinrichtung eine entsprechende optische Sequenz ausgewählt, die dem Formelement "Ecke des Polygonzuges" eindeutig zugeordnet ist. Die ausgewählte optische Sequenz wird entweder darauf folgend oder bereits durch die Auswahl von der Sequenzerzeugungseinheit erzeugt.

Der Laserscanner des Systems detektiert die erzeugte optische Sequenz an dem ausgewählten Ort und kann dementsprechend diesem ausgewählten Ort mit Hilfe der für das entsprechende Formelement spezifischen optischen Sequenz ein Formelement zuordnen, indem es die in der ersten Speichereinrichtung abgelegte Zuordnung abfragt.

Die genannten Schritte werden so oft wiederholt, wie es die festzulegende bzw. zu bestimmende Form des Überwachungsbereiches verlangt. So ist es z.B. denkbar, dass die beschriebenen Schritte an jeder Ecke eines entsprechenden Polygonzuges zur Definition des polygonförmige Überwachungsbereiches durchgeführt werden. Andererseits kann es z.B. bei der Festlegung eines kreisförmigen Überwachungsbereiches ausreichen, wenn an einer Stelle der Radius entsprechend festgelegt wird.

Schließlich wird die auf diese Weise von dem Laserscanner des Systems aus den festgestellten Formelementen charakterisierte Form des Überwachungsbereiches abgespeichert.

Mit dem erfindungsgemäßen System bzw. dem erfindungsgemäßen Verfahren ist es also auf sehr einfache und intuitive Weise möglich, den Überwachungsbereich eines Laserscanners festzustellen oder festzulegen und den Laserscanner entsprechend zu konfigurieren. Das ist ohne spezielle Kenntnisse oder Anwendung einer speziellen Konfigurationssoftware möglich. Es ist keine zusätzliche Hardware außer der Sequenzerzeugungseinheit vonnöten. Dadurch, dass die Sequenzerzeugungseinheit physisch direkt an der Grenze des zu bestimmenden Überwachungsbereiches platziert wird, sind Fehler in der Dimensionierung unwahrscheinlicher als z.B. bei der Festlegung eines Überwachungsbereiches am Bildschirm einer Benutzeroberfläche.

Grundsätzlich ist es auch möglich, dreidimensionale Überwachungsbereiche zu konfigurieren, wenn die Sequenzerzeugungseinheit derart an unterschiedlichen Punkten eines Raumes platziert werden kann, z.B. auf entsprechend ausgestalteten Ständern, um auch die vertikale Richtung des Überwachungsbereiches festlegen zu können.

Das erfindungsgemäße System kann eine Sequenzerzeugungseinheit aufweisen, die je nach Auswahl des optischen Sequenz eine entsprechende optische Sequenz selbst generiert und an einer entsprechende Lichtquelle ausgibt. Zum Beispiel können die unterschiedlichen Lichtsignale, die den unterschiedlichen Formelementen zugeordnet sind, durch modulierte Lichtsignale mit unterschiedlicher Modulationsfrequenz oder Lichtsignale unterschiedlicher Lichtfrequenz gebildet sein. Die optische Empfangseinrichtung der Überwachungseinrichtung einer solchen Ausgestaltung des erfindungsgemäßen Systems kann dann aus der Frequenz des empfangenen Lichtsignals bzw. aus der Modulationsfrequenz des empfangenen Lichtsignals auf das ausgewählte Formelement schließen.

Eine besonders vorteilhafte Ausführungsform des erfindungsgemäßen Systems weist jedoch eine Sequenzerzeugungseinheit auf, bei der zumindest in einem Bereich der Oberfläche eine Änderung deren Remission hervorgerufen werden kann. Eine solche Remissionsänderung kann z.B. mit Hilfe einer elektromagnetischen Blende oder einer Flüssigkristallblende zu einer zeitveränderlichen Abschattung einer ansonsten reflektierenden Oberfläche der Sequenzerzeugungseinheit bewirkt werden. Mit Hilfe einer solchen Blende ist es möglich, in Abhängigkeit des ausgewählten Formelements ein entsprechendes zeitveränderliches Signal - z.B. mit spezifisch ausgewählter Frequenz - zu erzeugen, um eine solche frequenzabhängige optische Sequenz bei der Überwachungseinrichtung detektieren zu können, um das ausgewählte Formelement festlegen zu können.

Entsprechende Betätigung der Blende einer entsprechenden Ausführungsform der Sequenzerzeugungseinheit in der dem Formelement zugeordneten zeitlichen Sequenz ermöglicht es der Überwachungseinrichtung das entsprechende Formelement zu identifizieren.

Alternativ ist es z.B. möglich, eine Blendeneinrichtung vorzusehen, die um die Sequenzerzeugungseinheit, die dann vorzugsweise zylindrisch ausgestaltet ist, rotieren zu lassen. Weist die Blende eine oder mehrere Aperturen auf, so bewegen sich diese an der reflektierenden Oberfläche vorbei und erzeugen auf diese Weise eine zeitlich veränderte optische Sequenz, wenn die Sequenzerzeugungseinheit mit Licht z.B. der Überwachungseinrichtung beleuchtet wird.

Ähnlich kann auch eine bewegliche, insbesondere rotierbare, Trägereinrichtung an der Sequenzerzeugungseinheit vorgesehen sein, die einen oder mehrere reflektierende Teilbereiche trägt und zur Remissionsänderung einsetzt wird.

Bei den beschriebenen Ausgestaltungen, bei denen die optische Sequenz mit Hilfe einer Änderung der Remission der Sequenzerzeugungseinheit erzeugt wird, wirkt die Sequenzerzeugungseinheit also passiv. Der von dem Laserscanner ausgesendete Laserstrahl trifft auf die Sequenzerzeugungseinheit. In Abhängigkeit der zeitveränderlichen Remission der Sequenzerzeugungseinheit wird der Laserstrahl entsprechend zeitabhängig mit unterschiedlicher Intensität zurückreflektiert und von der optischen Empfangseinrichtung der Überwachungseinrichtung detektiert. Die optische Sequenz, die an der Sequenzerzeugungseinheit zeitveränderlich erzeugt wird, kann so von der Überwachungseinrichtung detektiert werden und zur Feststellung oder Festlegung der Form des Überwachungsbereiches verwendet werden. Eine Sendeeinrichtung und eine entsprechende Empfangseinrichtung sind dabei in an sich bekannter Weise vorgesehen.

Besonders vorteilhafterweise wird in der ersten Speichereinrichtung zu den entsprechenden Formelementen jeweils eine Codiersequenz als optische Sequenz abgelegt, die von der optischen Empfangseinrichtung der Überwachungseinrichtung erkannt werden kann.

Die Erfindung betrifft außerdem wie beschrieben ein erfindungsgemäßes Konfigurationsverfahren zur Festlegung eines Überwachungsbereiches, insbesondere des Überwachungsbereiches eines Scanners, mit den Merkmalen des Anspruchs 10. Die Vorteile des erfindungsgemäßen Konfigurationsverfahrens ergeben sich aus den oben geschilderten Vorteilen des erfindungsgemäßen Systems. Vorteilhafte Ausgestaltungen des erfindungsgemäßen Konfigurationsverfahrens ergeben sich in analoger Weise aus der obigen Schilderung der besonderen Ausführungsformen des erfindungsgemäßen Systems.

Mit dem erfindungsgemäßen System bzw. dem erfindungsgemäßen Verfahren kann der Überwachungsbereich eines Laserscanners entweder (i) neu festgelegt werden - indem die Sequenzerzeugungseinheit an die entsprechenden Punkte eines festzulegenden Überwachungsbereiches platziert wird - oder (ii) der Überwachungsbereich eines Laserscanners festgestellt und zum Beispiel der Auswerteeinheit mitgeteilt werden - indem die Sequenzerzeugungseinheit an die charakteristischen Punkte des existierenden Überwachungsbereiches platziert wird. Beide Verfahrensführungen sind von der Erfindung umfasst und sollen unter dem Begriff "Konfiguration" bzw. "Bestimmung" verstanden werden.

Weitere erfindungsgemäße Ausführungsformen und Ausgestaltungen ergeben sich aus den Unteransprüchen, den Figuren und der Beschreibung.

Die Erfindung wird anhand von erfindungsgemäßen Ausführungsbeispielen geschildert, die in den anliegenden schematischen Figuren dargestellt sind. Es zeigen:
- Fig. 1: eine Sequenzerzeugungseinheit einer ersten Ausgestaltung eines erfindungsgemäßen Systems,
- Fig. 2: eine Draufsicht auf die Oberseite der Sequenzerzeugungseinheit der Fig. 1,
- Fig. 3: ein Beispiel eines mit einem erfindungsgemäßen System zu konfigurierenden Überwachungsbereiches,
- Fig. 4: ein weiteres Beispiel eines mit einem erfindungsgemäßen System konfigurierbaren Überwachungsbereiches,
- Fig. 5: eine Sequenzerzeugungseinheit einer zweiten Ausgestaltung eines erfindungsgemäßen Systems,
- Fig. 6: eine Sequenzerzeugungseinheit einer dritten Ausgestaltung eines erfindungsgemäßen Systems, und
- Fig. 7: eine Sequenzerzeugungseinheit einer vierten Ausgestaltung eines erfindungsgemäßen Systems.

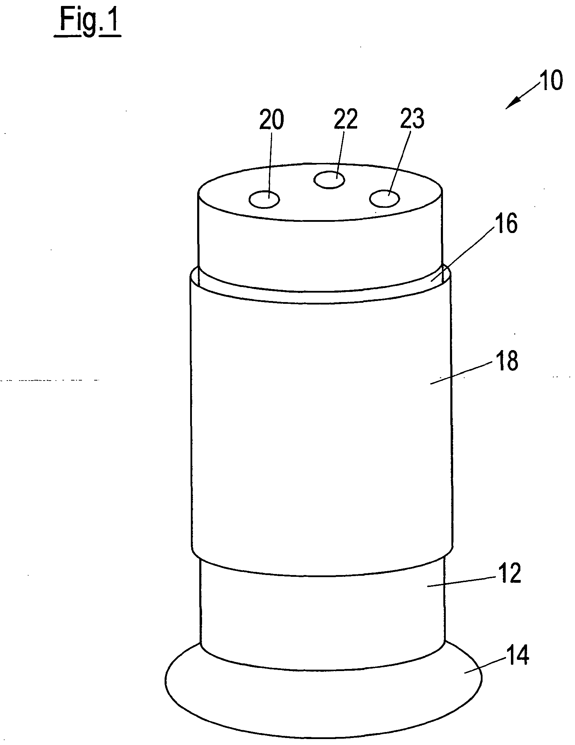

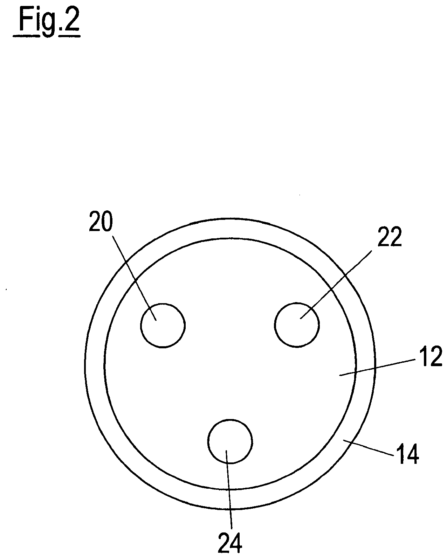

Die Fig. 1 und 2 zeigen eine Sequenzerzeugungseinheit 10 in perspektivischer Ansicht bzw. in Draufsicht. Man erkennt einen zylindrischen Grundkörper 12 mit einem Ständer 14, der dem sicheren Stehen dient.

An dem zylindrischen Grundkörper 12 ist eine reflektierende Oberfläche 16 vorgesehen, z.B. eine aufgeklebte Reflektorfolie, die hier von der noch zu beschreibenden Flüssigkristallblende 18 abgedeckt wird. Auf der oberen Stirnfläche des zylindrischen Grundkörpers 12 sind drei Auswahlknöpfe 20, 22 und 24 erkennbar.

Bezugszeichen 18 bezeichnet eine Flüssigkristallblende, die wie ein Flüssigkristalldisplay in an sich bekannter Weise im Ganzen oder in Bereichen opak oder transparent geschaltet werden kann. Dazu wird an die Flüssigkristallblende ähnlich wie an ein Flüssigkristalldisplay in geeigneter Weise Spannung angelegt.

Die Auswahlknöpfe 20, 22 und 24 dienen der Auswahl einer Sequenz, die an der Flüssigkristallblende 18 eingestellt werden kann. Dabei wird je nach Auswahl über die Knöpfe 20, 22, 24 eine unterschiedliche Codesequenz an die Flüssigkristallblende 18 eingestellt, so dass je nach ausgewählter Sequenz eine unterschiedliche Abfolge von opaken und transparenten Zeiträumen mit der Flüssigkristallblende 18 erzeugt wird. Die Sequenzerzeugungseinheit weist dazu eine entsprechende Ansteuereinrichtung für die Flüssigkristallblende 18 auf.

Je nachdem, welcher Auswahlknopf 20, 22, 24 gedrückt wird, wird also die Reflektorfolie 16 in unterschiedlicher zeitlicher Abfolge von außen sichtbar.

Die Anzahl der Knöpfe kann unterschiedlich sein, je nachdem, wie viele unterschiedliche optische Sequenzen mit der Sequenzerzeugungseinheit darstellbar sein können. Jede andere denkbare Auswahlmöglichkeit ist ebenfalls möglich, zum Beispiel ein Drehknopf, eine Funk- oder Bluetoothübermittlung etc.

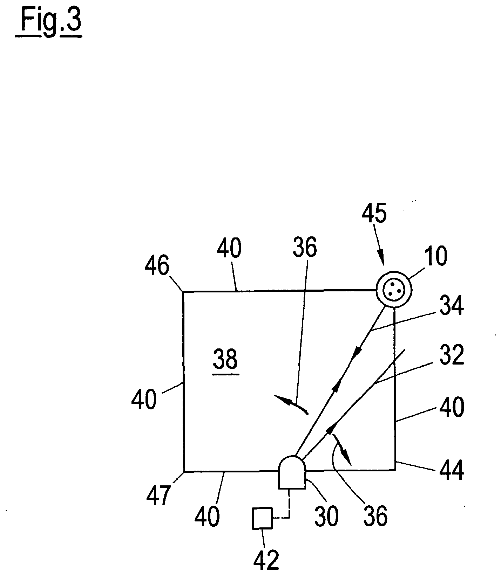

Fig. 3 zeigt eine mögliche Anwendung einer solchen Sequenzerzeugungseinheit. Schematisch ist hier ein Laserscannersystem 30 dargestellt. Der Laserstrahl 32, 34 wird periodisch in der Ablenkrichtung 36 hin und her geschwenkt, wobei dies z.B. mit einem innerhalb des Laserscanners 30 in an sich bekannter Weise rotierenden Ablenkspiegel geschieht. Trifft der Laserstrahl 32, 34 auf ein Hindernis, wird er reflektiert und von einem in dem Laserscanner 30 in an sich bekannter Weise vorhandenem Empfänger detektiert, so dass die Winkellage eines reflektierenden oder remittierenden Objekts registriert werden kann. Aus der Laufzeit eines von dem Laserscanner 30 ausgesendeten und vom Objekt zurückreflektierten Lichtpulses kann die Auswerteeinheit 42 außerdem die Entfernung eines reflektierenden Objekts bestimmen. Die entsprechenden Informationen können mit einer hier nur schematisch dargestellten Auswerteeinheit 42 ausgewertet werden, um eine Information über Objekte und deren Lage in dem Überwachungsbereich zu erhalten.

In Fig. 3 ist mit 38 ein gewünschter Überwachungsbereich dargestellt, der durch Grenzlinien 40 begrenzt sein soll. Um diesen Überwachungsbereich festzulegen, wird die Sequenzerzeugungseinheit 10 nacheinander an den Ecken 44, 45, 46 und 47 des hier rechteckig gewünschten Überwachungsbereichs 38 platziert. In Fig. 3 ist der Zeitpunkt gezeigt, bei dem die Sequenzerzeugungseinheit 10 an der Ecke 45 platziert ist. Die möglichen optischen Sequenzen einer solchen Sequenzerzeugungseinheit können z.B. wie folgt sein: Auswahl mit dem Knopf 20: "Beginn eines Polygonzuges", Auswahlknopf 22: "Eckpunkt eines Polygonzuges", Auswahlknopf 24: "Ende eines Polygonzuges". Andere Knöpfe können für andere Formelemente vorgesehen sein. Die Anzahl der Auswahlknöpfe 20, 22, 24 bestimmt sich dabei aus der Anzahl der möglichen Formelemente, die über unterschiedliche optische Sequenzen mit der Sequenzerzeugungseinheit 10 dargestellt werden sollen.

Mit einem solchen erfindungsgemäßen System kann das erfindungsgemäße Verfahren wie folgt durchgeführt werden:
Der Scanner 30 wird in Betrieb genommen, so dass sich der Laserstrahl 32 periodisch in der Richtung der Pfeile 36 bewegt.

Zunächst wird die Sequenzerzeugungseinheit 10 an der Ecke 44 des gewünschten Überwachungsbereiches 38 platziert.

Durch Auswahl mit dem Knopf 20 (Beginn des Polygonzuges) wird eine entsprechende optische Sequenz mit Hilfe der Flüssigkristallblende 18 eingestellt, die in charakteristischer Weise zeitlich veränderlich ist, z.B. mit einer ersten Frequenz. Die Sequenzerzeugungseinheit erzeugt dann automatisch diese Sequenz. Der sich in Richtung 36 über das Scanfeld bewegende Laserstrahl wird an der Sequenzerzeugungseinheit 10 am Punkt 44 auftreffen und entsprechend der zeitlichen Veränderung der durch die Flüssigkristallblende 18 hervorgerufenen Remissionsänderung mit einer entsprechenden zeitlichen Veränderung reflektiert. Der Laserscanner 30 und seine Auswerteeinheit 42 registrieren die entsprechende zeitliche Veränderung der optischen Sequenz und können mit über eine in einer Speichereinrichtung der Auswerteeinheit 42 abgelegten Zuordnung aus der detektierten optischen Sequenz auf ein Formelement schließen, das zu dieser optischen Sequenz passt, im vorliegenden Fall also das Formelement "Beginn des Polygonzuges".

In der Auswerteeinheit 42 des Laserscanners 30 überprüft ein entsprechender Auswertealgorithmus kontinuierlich, ob im Scanfeld des Laserscanners 30 eine Remissionsänderung erkannt wird, die der optischen Sequenz eines entsprechenden Formelements entspricht. Es kann auch vorgesehen sein, dass ein entsprechender Einlernmodus aktiv eingeschaltet werden muss.

Als Nächstes wird die Sequenzerzeugungseinheit 10 an einem Eckpunkt 45 des polygonförmigen gewünschten Überwachungsbereiches 38 platziert. Durch Auswahl z.B. mit dem Auswahlknopf 22 wird eine optische Sequenz zur Darstellung mit der Sequenzerzeugungseinheit 10 ausgewählt, die dem Formelement "Eckpunkt des Polygonzuges" entspricht. Trifft der Laserstrahl 32, 34 auf die Sequenzerzeugungseinheit 10 an dieser Stelle, so registriert der Laserstrahl die von der Sequenzerzeugungseinheit erzeugte optische Sequenz, die spezifisch für dieses ausgewählte Formelement ist. Der Laserscanner 30 mit seiner Auswerteeinheit 42 können dieser optischen Sequenz wiederum mit Hilfe der in der Speichereinrichtung der Auswerteeinheit 42 abgelegten Zuordnung das entsprechende Formelement "Ecke des Polygonzuges" zuordnen und es abspeichern.

Als Nächstes wird die Sequenzerzeugungseinheit 10 an einem anderen Eckpunkt 46 des Polygonzuges platziert und wieder mit Hilfe des Auswahlknopfs 22 das Formelement "Eckpunkt des Polygonzuges" ausgewählt. Die Sequenzerzeugungseinheit 10 erzeugt mit Hilfe der Flüssigkristallblende 18 die entsprechende optische Sequenz, die von dem Laserstrahl 32, 34 des Laserscanners 30 detektiert wird. Wiederum kann die Auswerteeinheit 42 über die in ihrer Speichereinheit abgelegte Zuordnung aus der optischen Sequenz auf das ausgewählte Formelement zurückschließen.

Schließlich wird die Sequenzerzeugungseinheit 10 am Endpunkt 47 des Polygonzuges platziert und mit Hilfe des Auswahlknopfs 24 das Formelement "Endpunkt des Polygonzuges" ausgewählt. Trifft der Laserstrahl 32, 34 an dieser Stelle auf die Sequenzerzeugungseinheit, so kann der Laserscanner 30 die entsprechende von der Sequenzerzeugungseinheit erzeugte optische Sequenz detektieren und die Auswerteeinheit 42 über die in ihrer Speichereinrichtung abgelegte Zuordnung auf das entsprechende Formelement aus der optischen Sequenz zurückschließen.

In Fig. 3 ist beispielhaft ein Zustand dargestellt, bei dem die Sequenzerzeugungseinheit 10 am Eckpunkt 45 platziert ist, so dass hier der Laserstrahl 34, der gerade auf die Sequenzerzeugungseinheit 10 trifft, mit der zeitlichen Veränderung der ausgewählten optischen Sequenz reflektiert wird.

In an sich bekannter Weise ist dem Laserscanner 30 über seine normale ortsauflösende Funktion jeweils die Lage der Sequenzerzeugungseinheit 10 bekannt.

Die Auswerteeinheit kann aus den abgespeicherten Formelementen, deren Lage über das Laserscannersystem bekannt ist, auf die Form des auf diese Weise definierten Überwachungsbereiches schließen und den Laserscanner 30 entsprechend konfigurieren. Damit ist der Überwachungsbereich 38 des Laserscanners 30 fest konfiguriert.

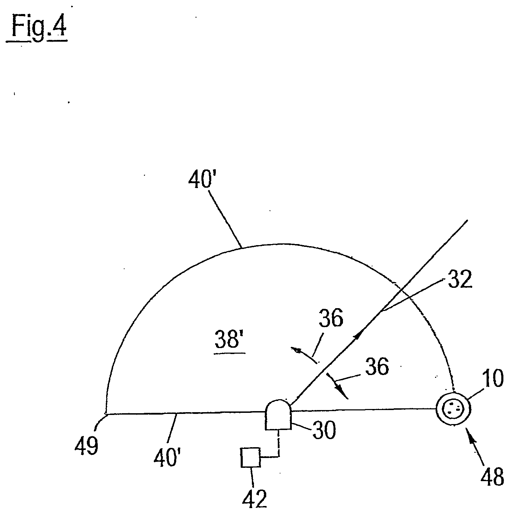

Eine alternative Anwendung zeigt Fig. 4. Hier soll ein halbkreisförmiger Überwachungsbereich 38' festgelegt werden und zur Konfiguration des Laserscanners 30 eingesetzt werden. Zunächst wird dazu die Sequenzerzeugungseinheit 10 am Eckpunkt 48 platziert. Über einen entsprechenden Auswahlknopf wird das Formelement "Beginn eines Halbkreises" ausgewählt und von der Sequenzerzeugungseinheit 10 eine entsprechend zugeordnete optische Sequenz erzeugt. Dazu wird wie bereits mit Bezug zu Fig. 1 bis 3 beschrieben, eine Flüssigkristallblende 18 mit einer diesem Formelement zugeordneten zeitlichen Codierung transparent bzw. opak gemacht.

Nachdem der Laserstrahl 32 des Laserscanners 30 die Position der Sequenzerzeugungseinheit 10 mit der entsprechenden optischen Sequenz registriert hat, wird die Sequenzerzeugungseinheit 10 am Endpunkt 49 des Halbkreises platziert und mit einem entsprechenden Auswahlknopf das Formelement "Ende eines Halbkreises" ausgewählt. Der Laserstrahl 32 des Laserscanners 30 registriert die optische Sequenz am entsprechenden Ort der Sequenzerzeugungseinheit 10 und kann - wie mit Bezug zu den Fig. 1 bis 3 beschrieben - aus der optischen Sequenz das entsprechende Formelement bestimmen und registrieren.

Damit kann die Auswerteeinheit 42 des Laserscanners 30 mit der Information über die Lage des Anfangs- und des Endpunkts des Halbkreises, der den Überwachungsbereich 38' begrenzen soll, den Überwachungsbereich 38' festlegen und den Laserscanner 30 mit dieser Information konfigurieren. Die Grenzen des gewünschten Schutzbereiches sind in Fig. 4 mit 40' angegeben.

Bei entsprechenden Anordnungen kann es auch ausreichend sein, die Sequenzerzeugungseinheit 10 an einem Punkt eines (Teil-)Kreises zu platzieren, um alleine den Radius als entsprechendes Formelement zu verwenden.

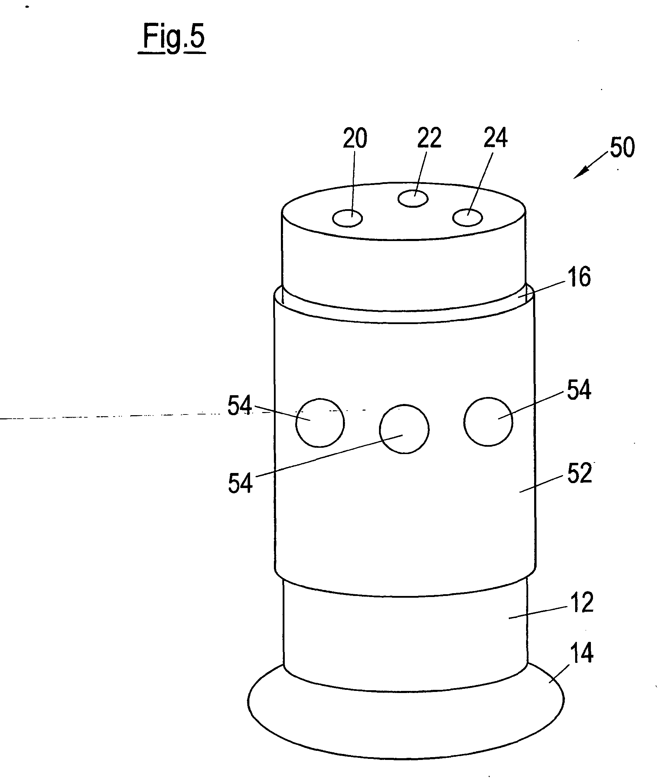

Fig. 5 zeigt eine alternative Ausgestaltung 50 der Sequenzerzeugungseinheit 50. Anstelle der Flüssigkristallblende 18 ist hier ein Blendenkörper 52 vorgesehen, der elektromagnetische Blenden 54 aufweist. Je nachdem, welche optische Sequenz dargestellt werden soll, werden diese Blenden 54 von der Sequenzerzeugungseinheit mit Hilfe eines entsprechenden automatischen Mechanismus in vorgegebener zeitlicher Abfolge geöffnet und geschlossen, so dass die reflektierende Oberfläche 16 mit einem zeitlichen Muster sichtbar wird.

Mit Hilfe des Laserstrahls 32, 34 des Laserscanners 30 wird dieses zeitliche Muster erkannt.

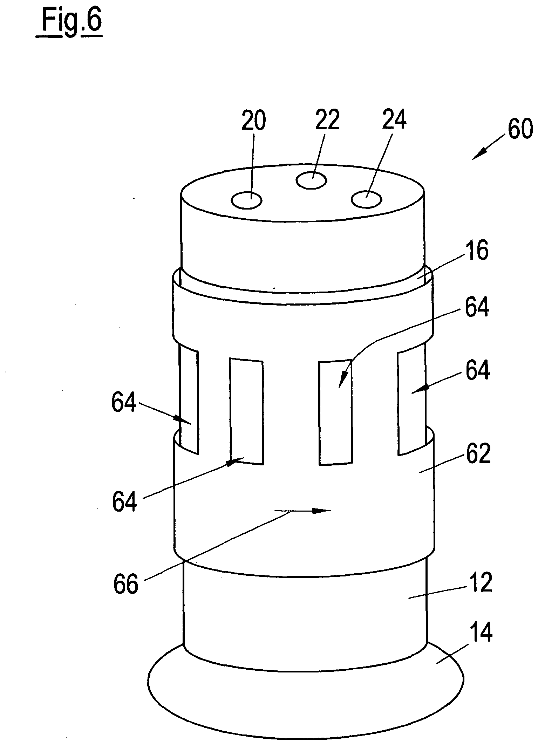

Fig. 6 zeigt eine weitere Ausführungsform, bei der ein Blendenkörper 62 in Richtung 66 rotiert. Aperturen 64 ermöglichen, dass Laserstrahlen des Laserscanners 30 von außen auf die hier dargestellte Sequenzerzeugungseinheit 60 auf die reflektierende Fläche 16 fallen und dort reflektiert werden. Je nach Geschwindigkeit der Bewegung des Blendenkörpers 62 in Rotationsrichtung 66 entsteht also eine andere Modulationsfrequenz des reflektierten Lichts. Dies kann von dem Laserscanner 30 detektiert werden. Je nachdem, welcher Auswahlknopf 20, 22, 24 gedrückt ist, wird der Blendenkörper 62 mit Hilfe eines entsprechenden Antriebes der Sequenzerzeugungseinheit unterschiedlich schnell gedreht, so dass unterschiedliche Frequenzen erzeugt werden können, die einzelnen Formelementen zugeordnet werden können, die mit Hilfe der Auswahlknöpfe ausgewählt werden können.

Alternativ kann anstelle des Blendenkörpers 62 ein z.B. als rotierender Zylinder ausgestalteter Trägerkörper mit reflektierendem Teilbereich vorgesehen sein.

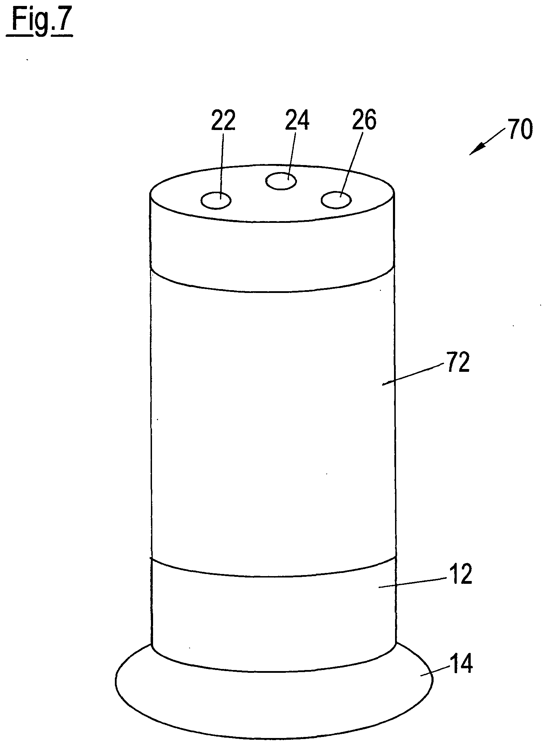

Fig. 7 zeigt eine Sequenzerzeugungseinheit 70 mit einer aktiven Beleuchtung 72. Je nach Auswahl mit den Auswahlknöpfen 22, 24, 26 wird Licht mit einer anderen Modulationsfrequenz ausgesendet, das von der optischen Empfangseinrichtung des Laserscanners 30 detektiert werden kann. Mit Hilfe der normalen Laserscannerfunktion wird die Lage der Sequenzerzeugungseinheit 70 in beschriebener Weise festgestellt, so dass eine Zuordnung der abgestrahlten optischen Sequenz zu der Lage der Sequenzerzeugungseinheit 70 möglich ist.

Alternativ kann auch eine kontinuierliche Lichtquelle zum Einsatz kommen, deren Abstrahlung mit Blenden - wie oben für die Remissionsänderung beschrieben - zeitlich verändert wird.

Das Verfahren zur Festlegung des Überwachungsbereiches, bei dem Sequenzerzeugungseinheiten 50, 60, 70 verwendet werden, wie sie in den Fig. 5, 6 und 7 gezeigt sind, entspricht dem Verfahren, das mit Bezug zu den Fig. 1 bis 4 erläutert ist, in analoger Weise.

Mit dem erfindungsgemäßen Verfahren und Systemen ist es einfach und schnell möglich, die Geometrie eines Überwachungsbereiches festzustellen, festzulegen oder zu ändern. Das Verfahren eignet sich vor allem für solche Anwender, bei denen kein geschultes Personal vor Ort vorhanden ist, das in der Lage wäre, mit komplizierter Konfigurationssoftware einen Überwachungsbereich festzulegen. Mit der Erfindung ist es z.B. auch möglich, eine Anlage in der Produktion mit Default-Überwachungsbereichen in Betrieb zu nehmen und die endgültige Dimensionierung des Überwachungsbereiches direkt vor Ort und angepasst an die jeweiligen Notwendigkeiten durchzuführen.

### Bezugszeichenliste

- 10: Sequenzerzeugungseinheit
- 12: Grundkörper
- 14: Ständer
- 16: reflektierende Oberfläche
- 18: Flüssigkristallblende
- 20, 22, 24: Sequenzauswahlknöpfe
- 30: Laserscanner
- 32, 34: Laserstrahl
- 36: Scanrichtung
- 38, 38': Überwachungsbereich
- 40, 40': Grenze des Überwachungsbereiches
- 42: Auswerteeinrichtung
- 44, 45, 46, 47, 48, 49: Positionen
- 50: Sequenzerzeugungseinheit
- 52: Blendenkörper
- 54: Blende
- 60: Sequenzerzeugungseinheit
- 62: Blendenkörper
- 64: Apertur
- 66: Rotation
- 70: Sequenzerzeugungseinheit
- 72: beleuchteter Bereich

## Patentansprüche

1. System zur Konfiguration eines Überwachungsbereiches (38, 38') eines Laserscanners (30), mit
(a) einer Sequenzerzeugungseinheit (10, 50, 60, 70) zur Erzeugung zeitlich veränderlicher unterscheidbarer optischer Sequenzen, die eine Auswahleinrichtung (20, 22, 24) zur Auswahl einer optischen Sequenz und eine Auslöseeinrichtung zum Auslösen der Erzeugung der ausgewählten optischen Sequenz durch die Sequenzerzeugungseinheit (10, 50, 60, 70) aufweist, und
(b) einem Laserscanner (30) zur ortsaufgelösten Überwachung eines Überwachungsbereiches (38, 38'), wobei der Laserscanner (30) folgendes aufweist:
(b1) eine optische Empfangseinrichtung zur Detektion des von der Sequenzerzeugungseinheit (10, 50, 60, 70) erzeugten optischen Sequenz,
(b2) eine erste Speichereinrichtung, in der eine Zuordnung zwischen (i) den an der Sequenzerzeugungseinheit auswählbaren optischen Sequenzen einerseits und (ii) Formelementen, die zur Charakterisierung der Form eines zu konfigurierenden Überwachungsbereiches (38, 38') dienen können, andererseits abgelegt ist,
(b3) eine zweite Speichereinrichtung zum Abspeichern einer Form eines Überwachungsbereiches (38, 38'), und
(b4) eine Auswerteeinrichtung (42) zur Bestimmung der Form eines Überwachungsbereiches (38, 38') aus den detektierten optischen Sequenzen und den in der ersten Speichereinrichtung abgelegten, diesen optischen Sequenzen zugeordneten Formelementen und zum Abspeichern der so festgelegten Form des Überwachungsbereiches (38, 38') in der zweiten Speichereinrichtung.

2. System zur Konfiguration eines Überwachungsbereiches eines Laserscanners nach Anspruch 1, bei dem die die Form eines zu konfigurierenden Überwachungsbereiches (38, 38') charakterisierenden Formelemente die Anfangs- und Endpunkte (48, 49) einer vorbestimmten Linie, insbesondere einer Teilkreislinie, umfassen.

3. System zur Konfiguration eines Überwachungsbereiches eines Laserscanners nach einem der Ansprüche 1 oder 2, bei dem die die Form eines zu konfigurierenden Überwachungsbereiches charakterisierenden Formelemente einen Radius eines Kreises oder Teilkreises umfassen.

4. System zur Konfiguration eines Überwachungsbereiches eines Laserscanners nach Anspruch 1, bei dem die die Form eines zu konfigurierenden Überwachungsbereiches charakterisierenden Formelemente die Eckpunkte (44, 45, 46, 47) eines Polygonzuges umfassen.

5. System zur Konfiguration eines Überwachungsbereiches eines Laserscanners nach einem der Ansprüche 1 bis 4, bei dem die Sequenzerzeugungseinheit eine Einheit (10, 50, 60) zur Änderung der Remission zumindest eines Bereiches der Sequenzerzeugungseinheit umfasst.

6. System zur Konfiguration eines Überwachungsbereiches eines Laserscanners nach Anspruch 5, bei dem die Sequenzerzeugungseinheit eine reflektierende Oberfläche (16) und eine elektromagnetische Blende (52, 54) oder eine Flüssigkristallblende (18) zur zeitveränderlichen Abschattung der reflektierenden Oberfläche (16) zur Änderung der Remission umfasst.

7. System zur Konfiguration eines Überwachungsbereiches eines Laserscanners nach Anspruch 5, bei dem die Sequenzerzeugungseinheit eine bewegliche, insbesondere eine rotierbare, Blendeneinrichtung (62) mit einer oder mehreren Aperturen (64) umfasst, die an einer reflektierenden Oberfläche (16) vorbeibewegt wird um eine zeitlich veränderliche optische Sequenz zu erzeugen.

8. System zur Konfiguration eines Überwachungsbereiches eines Laserscanners nach Anspruch 5, bei dem die Sequenzerzeugungseinheit eine bewegliche, insbesondere rotierbare, Trägereinrichtung mit einem oder mehreren reflektierenden Teilbereichen umfasst, die bewegt wird, um eine zeitlich veränderbare optische Sequenz zu erzeugen.

9. System zur Konfiguration eines Überwachungsbereiches eines Laserscanners nach einem der Ansprüche 1 bis 4, bei dem die Sequenzerzeugungseinheit (70) eine Lichtquelle (72) zur Erzeugung unterschiedlicher Lichtsignale, insbesondere modulierte Lichtsignale mit unterschiedlicher Modulationsfrequenz, umfasst.

10. Konfigurationsverfahren zur Festlegung eines Überwachungsbereiches eines Laserscanners, bei dem
(a) eine Sequenzerzeugungseinheit (10, 50, 60, 70) eines Systems nach einem der Ansprüche 1 bis 9 an einem ausgewählten Ort (44, 45, 46, 47, 48, 49) eines zu bestimmenden Überwachungsbereiches (38, 38') platziert wird,
(b) mit der Auswähleinrichtung (20, 22, 24) der Sequenzerzeugungseinheit (10, 50, 60, 70) eine optische Sequenz ausgewählt wird, die einem Formelement entspricht, das die Form des zu bestimmenden Überwachungsbereiches (38, 38') an dem ausgewählten Ort (44, 45, 46, 47, 48, 49) charakterisiert,
(c) die Erzeugung der ausgewählten optischen Sequenz ausgelöst wird,
(d) mit dem Laserscanner (30) des Systems die erzeugte optische Sequenz am ausgewählten Ort (44, 45, 46, 47, 48, 49) detektiert wird und das der detektierten optischen Sequenz gemäß der in der ersten Speichereinrichtung abgelegten Zuordnung zugeordnete Formelement festgestellt wird,
(e) gegebenenfalls die Schritte (a) bis (d) so oft wiederholt werden, bis die Form des zu bestimmenden Überwachungsbereiches (38, 38') ausreichend charakterisiert ist, und
(f) Abspeichern der durch die festgestellten Formelemente charakterisierten Form des Überwachungsbereiches (38, 38').

## Claims

1. A system for configuring a monitored zone (38, 38') of a laser scanner (30), said system comprising
(a) a sequence generation unit (10, 50, 60, 70) for generating time-variable distinguishable optical sequences which has a selection device (20, 22, 24) for selecting an optical sequence and a triggering device for triggering the generation of the selected optical sequence by the sequence generation unit (10, 50, 60, 70); and
(b) a laser scanner (30) for the spatially resolved monitoring of a monitored zone (38, 38'), wherein the laser scanner (30) has the following:
(b1) an optical reception device for detecting the optical sequence generated by the sequence generation unit (10, 50, 60, 70);
(b2) a first memory device in which an association is stored between (i) the optical sequences selectable at the sequence generation unit, on the one hand, and (ii) shape elements which can serve for the characterization of the shape of a monitored zone (38, 38') to be configured, on the other hand;
(b3) a second memory device for storing a shape of a monitored zone (38, 38'); and
(b4) an evaluation device (42) for determining the shape of a monitored zone (38, 38') from the detected optical sequences and from the shape elements, which are stored in the first memory device and are associated with these optical sequences, and for storing the shape thus determined of the monitored zone (38, 38') in the second memory device.

2. A system for configuring a monitored zone of a laser scanner in accordance with claim 1, in which the shape elements characterizing the shape of a monitored zone (38, 38') to be configured comprise the starting points and the end points (48, 49) of a predefined line, in particular of a line of a part circle.

3. A system for configuring a monitored zone of a laser scanner in accordance with one of the claims 1 or 2, in which the shape elements characterizing the shape of a monitored zone to be configured comprise a radius of a circle or part circle.

4. A system for configuring a monitored zone of a laser scanner in accordance with claim 1, in which the shape elements characterizing the shape of a monitored zone to be configured comprise the corner points (44, 45, 46, 47) of a polygonal chain.

5. A system for configuring a monitored zone of a laser scanner in accordance with any one of the claims 1 to 4, in which the sequence generation unit comprises a unit (10, 50, 60) for varying the remission of at least one region of the sequence generation unit.

6. A system for configuring a monitored zone of a laser scanner in accordance with claim 5, in which the sequence generation unit comprises a reflective surface (16) and an electromagnetic diaphragm (52, 54) or a liquid crystal diaphragm (18) for the time-variable shading of the reflective surface (16) for varying the remission.

7. A system for configuring a monitored zone of a laser scanner in accordance with claim 5, in which the sequence generation unit comprises a movable diaphragm device (62), in particular a rotatable diaphragm device (62), which has one or more apertures (64) and which is moved past a reflective surface (16) to generate a time-variable optical sequence.

8. A system for configuring a monitored zone of a laser scanner in accordance with claim 5, in which the sequence generation unit comprises a movable carrier device, in particular a rotatable carrier device, which has one or more reflective part regions and which is moved to generate a time-variable optical sequence.

9. A system for configuring a monitored zone of a laser scanner in accordance with any one of the claims 1 to 4, in which the sequence generation unit (70) comprises a light source (72) for generating different light signals, in particular modulated light signals with a different modulation frequency.

10. A configuration method for fixing a monitored zone of a laser scanner, in which
(a) a sequence generation unit (10, 50, 60, 70) of a system in accordance with any one of the claims 1 to 9 is positioned at a selected location (44, 45, 46, 47, 48, 49) of a monitored zone (38, 38') to be determined;
(b) an optical sequence is selected using the selection device (20, 22, 24) of the sequence generation unit (10, 50, 60, 70), said optical sequence corresponding to a shape element which characterizes the shape of the monitored zone (38, 38') to be determined at the selected location (44, 45, 46, 47, 48, 49);
(c) the generation of the selected optical sequence is triggered;
(d) the generated optical sequence is detected at the selected location (44, 45, 46, 47, 48, 49) using the laser scanner (30) of the system and the shape element associated with the detected optical sequence is determined in accordance with the association stored in the first memory device;
(e) if applicable, the steps (a) to (d) are repeated so often until the shape of the monitored zone (38, 38') to be determined is sufficiently characterized; and
(f) storing the shape of the monitored zone (38, 38') **characterized by** the determined shape elements.

## Revendications

1. Système de configuration d'une zone à surveiller (38, 38') d'un scanner laser (30), comprenant
(a) une unité de génération de séquences (10, 50, 60, 70) pour générer des séquences optiques distinguables, variables dans le temps, qui comprend un dispositif de sélection (20, 22, 24) pour sélectionner une séquence optique et un dispositif de déclenchement pour déclencher la génération de la séquence optique sélectionnée par l'unité de génération de séquences (10, 50, 60, 70), et
(b) un scanner laser (30) pour la surveillance à résolution spatiale d'une zone à surveiller (38, 38'), le scanneur laser (30) comprenant :
(b1) un dispositif de réception optique pour détecter la séquence optique générée par l'unité de génération de séquences (10, 50, 60, 70),
(b2) un premier dispositif de mémoire dans lequel est stockée une association entre (i) les séquences optiques sélectionnables au niveau de l'unité de génération de séquences, d'une part, et (ii) les éléments de forme pouvant servir à caractériser la forme d'une zone à surveiller (38, 38') à configurer, d'autre part,
(b3) un deuxième dispositif de mémoire pour stocker une forme d'une zone à surveiller (38, 38'), et
(b4) un dispositif d'évaluation (42) pour déterminer la forme d'une zone à surveiller (38, 38') à partir des séquences optiques détectées et des éléments de forme stockés dans le premier dispositif de mémoire et associés à ces séquences optiques, et pour stocker dans le deuxième dispositif de mémoire la forme ainsi définie de la zone à surveiller (38, 38').

2. Système de configuration d'une zone à surveiller d'un scanneur laser selon la revendication 1, dans lequel les éléments de forme caractérisant la forme d'une zone à surveiller (38, 38') à configurer comprennent les points initial et final (48, 49) d'une ligne prédéterminée, en particulier d'une ligne de cercle partiel.

3. Système de configuration d'une zone à surveiller d'un scanner laser selon l'une des revendications 1 ou 2, dans lequel les éléments de forme caractérisant la forme d'une zone à surveiller à configurer comprennent un rayon d'un cercle ou d'un cercle partiel.

4. Système de configuration d'une zone à surveiller d'un scanner laser selon la revendication 1, dans lequel les éléments de forme caractérisant la forme d'une zone à surveiller à configurer comprennent les sommets (44, 45, 46, 47) d'un tracé polygonal.

5. Système de configuration d'une zone à surveiller d'un scanner laser selon l'une des revendications 1 à 4, dans lequel l'unité de génération de séquences comprend une unité (10, 50, 60) de modification de la réémission d'au moins une zone de l'unité de génération de séquences.

6. Système de configuration d'une zone à surveiller d'un scanner laser selon la revendication 5, dans lequel l'unité de génération de séquences comprend une surface réfléchissante (16) et un obturateur électromagnétique (52, 54) ou un obturateur à cristaux liquides (18) pour l'ombrage variable dans le temps de la surface réfléchissante (16) afin de modifier la réémission.

7. Système de configuration d'une zone à surveiller d'un scanner laser selon la revendication 5, dans lequel l'unité de génération de séquences comprend un dispositif d'obturateur (62) mobile, en particulier rotatif, ayant une ou plusieurs ouvertures (64), qui est déplacée devant une surface réfléchissante (16) pour générer une séquence optique variable dans le temps.

8. Système de configuration d'une zone à surveiller d'un scanner laser selon la revendication 5, dans lequel l'unité de génération de séquences comprend un dispositif porteur mobile, en particulier rotatif, ayant une ou plusieurs zones partielles réfléchissantes, qui est déplacé pour générer une séquence optique variable dans le temps.

9. Système de configuration d'une zone à surveiller d'un scanner laser selon l'une des revendications 1 à 4, dans lequel l'unité de génération de séquences (70) comprend une source de lumière (72) pour générer différents signaux lumineux, en particulier des signaux lumineux modulés avec une fréquence de modulation différente.

10. Procédé de configuration pour définir une zone à surveiller d'un scanner laser, consistant à
(a) placer une unité de génération de séquences (10, 50, 60, 70) d'un système selon l'une des revendications 1 à 9 à un emplacement sélectionné (44, 45, 46, 47, 48, 49) d'une zone à surveiller (38, 38') à déterminer,
(b) sélectionner une séquence optique au moyen du dispositif de sélection (20, 22, 24) de l'unité de génération de séquences (10, 50, 60, 70), ladite séquence correspondant à un élément de forme caractérisant la forme de la zone à surveiller (38, 38') à déterminer à l'emplacement sélectionné (44, 45, 46, 47, 48, 49),
(c) déclencher la génération de la séquence optique sélectionnée,
(d) détecter la séquence optique générée à l'emplacement sélectionné (44, 45, 46, 47, 48, 49) au moyen du scanneur laser surveiller (30) du système, et définir l'élément de forme associé à la séquence optique détectée conformément à l'association stockée dans le premier dispositif de mémoire,
(e) le cas échéant, répéter les étapes (a) à (d) jusqu'à ce que la forme de la zone à surveiller (38, 38') à déterminer soit suffisamment **caractérisée**, et
(f) stocker la forme de la zone à surveiller (38, 38') **caractérisée par** les éléments de forme définis.
